# EUROPÄISCHE PATENTANMELDUNG

(11) **EP 2 853 430 A2**
(43) Veröffentlichungstag der Anmeldung: **01.04.2015**
(21) Anmeldenummer: 14171227.3
(22) Anmeldetag: 05.06.2014
(51) Int. Cl.: B60K 15/077

(54) **Landwirtschaftliches Fahrzeug**

(30) Priorität: 06.09.2013 DE 102013014754
(71) Anmelder: CLAAS Selbstfahrende Erntemaschinen GmbH, 33428 Harsewinkel (DE)
(72) Erfinder: Nagelsmöller, Bernd, 33829 Borgholzhausen (DE); Speckamp, Dirk, 59073 Hamm (DE); Terörde, Stefan, 48231 Warendorf (DE); Dirks, Matthias, 33142 Büren (DE)

(57) **Zusammenfassung**

Der Betriebsmitteltank eines landwirtschaftlichen Fahrzeugs weist ein mit Betriebsmittel befüllbares Nutzvolumen (3) und ein nicht befüllbares Totvolumen (6) auf. Die Aufteilung des Tanks (1) in Nutzvolumen (3) und Totvolumen (6) ist veränderbar.

## Beschreibung

Die vorliegende Erfindung betrifft ein landwirtschaftliches Fahrzeug, und zwar insbesondere einen Betriebsmitteltank eines solchen Fahrzeugs.

In manchen Ländern unterliegen das Gesamtgewicht und/oder die maximale Achslast von landwirtschaftlichen Fahrzeugen gesetzlichen Vorgaben. Um diese einhalten zu können, muss ein Hersteller solcher Fahrzeuge sicherstellen, dass die zulässigen Werte auch mit vollständig gefülltem Betriebsmitteltank nicht überschritten werden. Andererseits ist ein großer Tank wünschenswert, um lange Arbeitseinsätze ohne die Produktivität beeinträchtigende Tankunterbrechungen zu ermöglichen. Bei einem vollgetankten landwirtschaftlichen Fahrzeug kann das Gewicht der Betriebsmittel ohne weiteres mehrere hundert Kilogramm erreichen.

Damit ein gleicher Fahrzeugtyp in Ländern eingesetzt werden kann, in denen das Fahrzeuggewicht oder die Achslast unterschiedlich reglementiert sind, gleichzeitig aber unnötig häufige Tankvorgänge vermieden werden können, ist es möglich, ein solches Fahrzeug mit jeweils länderspezifischen Tankmodellen auszustatten, deren Fassungsvermögen jeweils im Hinblick auf die geltenden Gewichtsbeschränkungen begrenzt ist. Die Fertigung von länderspezifischen Tanks in kleinen Stückzahlen ist jedoch mit hohen Kosten verbunden, die an die Kunden in den betreffenden Ländern weitergegeben werden müssen und sich nachteilig auf deren Wettbewerbsfähigkeit auswirken. Es besteht daher Bedarf nach landwirtschaftlichen Fahrzeugen, deren Gewicht mit einfachen, preiswerten Maßnahmen an länderspezifische Vorschriften anpassbar ist.

Dieser Bedarf wird erfindungsgemäß erfüllt durch ein landwirtschaftliches Fahrzeug mit einem Betriebsmitteltank, der ein mit Betriebsmittel befüllbares Nutzvolumen und ein nicht befüllbares Totvolumen aufweist. Indem lediglich die Aufteilung des Tanks auf Nutzvolumen und Totvolumen variiert wird, kann ein gleicher Tank länderübergreifend verwendet werden.

Einer ersten Ausgestaltung der Erfindung zu Folge sind Nutzvolumen und Totvolumen durch eine Wand innerhalb des Betriebsmitteltanks voneinander getrennt. Da eine solche Wand nicht dieselben Anforderungen hinsichtlich Lecksicherheit erfüllen muss wie der Betriebsmitteltank selber, kann die Wand zu relativ geringen Kosten nachgerüstet werden, oder es kann der Betriebsmitteltank standardmäßig mit der Wand ausgestattet sein, wobei die Wand nachträglich durchbrochen oder entfernt werden kann, wenn das Fahrzeug in einem Land zum Einsatz kommt, dessen Vorschriften eine Nutzung des bei intakter Wand nicht befüllbaren Totvolumens zulassen. Vorzugsweise ist die Wand Teil eines in dem Betriebsmitteltank enthaltenen inneren Behälters. Der Behälter kann das Betriebsmittel aufnehmen, er kann aber auch das Totvolumen umschließen.

Wenn die Wand beweglich ist, ist die Anpassung des Tanks an unterschiedliche gesetzliche Vorschriften auf besonders einfache Weise möglich. Eine solche bewegliche Wand kann insbesondere flexibel und/oder dehnbar sein.

Wenn die bewegliche Wand Teil eines Behälters ist, dann umschließt dieser vorzugsweise das Totvolumen; dessen Ausmaße sind auf einfache Weise festlegbar, wenn der Behälter mit einer vorgegebenen Gasmenge befüllt und anschließend dicht verschlossen wird.

Einer zweiten Ausgestaltung zu Folge kann wenigstens ein Teil des Betriebsmitteltanks oberhalb eines unteren Endes eines Einfüllstutzens liegen. Sobald der Betriebsmittelspiegel im Tank über diesem unteren Ende liegt, ist eine Entlüftung des oberen Teils des Tanks über den Einfüllstutzen nicht mehr möglich, so dass dieser Bereich oder wenigstens ein Teil davon als Totvolumen genutzt werden kann, ohne dass er durch eine Wand von dem Nutzvolumen getrennt sein muss.

Um die maximale Höhe des Betriebsmittelspiegels im Tank und damit die Grenze zwischen Nutz- und Totvolumen festzulegen, kann der Betriebsmitteltank mehrere Entlüftungsanschlüsse in unterschiedlichen Höhen aufweisen, die bis auf einen dicht verschlossen sind.

Vorzugsweise passt ein gleicher Stopfen auf alle Entlüftungsanschlüsse; so ist allein durch das Platzieren des Stopfens eine Anpassung des Tanks an die diversen nationalen Vorschriften möglich.

Der Einfüllstutzen kann ein ins Tankinnere hineinragendes Rohr umfassen.

Um eine Anpassung der Länge des Rohrs an unterschiedliche maximal zulässige Betriebsmittelspiegel zu ermöglichen, ist es zweckmäßig, wenn das Rohr ein von der Wand getrenntes Bauteil ist.

Das Rohr sollte in eine Öffnung der Wand dicht eingefügt sein, um eine Entlüftung zwischen Rohr und Wand, die ein Befüllen des Tanks über das Rohrende hinaus ermöglichen würde, auszuschließen.

Der Betriebsmitteltank kann insbesondere ein Kraftstofftank oder ein Tank für ein Verbrennungshilfsmittel wie etwa bekanntermaßen zur Reduktion von Stickoxiden im Abgas des Verbrennungsmotors verwendete Harnstofflösung sein.

Ein dem Betriebsmitteltank zugeordneter Füllstandsanzeiger sollte der Möglichkeit, das Fassungsvermögen des Tanks durch Verändern des Totvolumens willkürlich einzuschränken, Rechnung tragen. Zu diesem Zweck kann an dem Füllstandsanzeiger insbesondere die Differenz zwischen einem aktuellen Füllstand und einem Referenzfüllstand ablesbar sein, wobei der Referenzfüllstand jeweils an das eingestellte Fassungsvermögen angepasst sein sollte.

Insbesondere kann der Füllstandsanzeiger eine Skala aufweisen, wobei der Referenzfüllstand einen Endpunkt der Skala bildet.

In Betracht kommt aber auch, dass der Füllstandsanzeiger einen zu der Differenz zwischen aktuellem Füllstand und Referenzfüllstand direkt proportionalen Zahlenwert anzeigt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1 bis 5: jeweils schematische Schnittdarstellungen eines Betriebsmitteltanks gemäß unterschiedlichen Ausgestaltungen der Erfindung; und
- Fig. 6: zwei Ansichten einer analogen Füllstandanzeige.

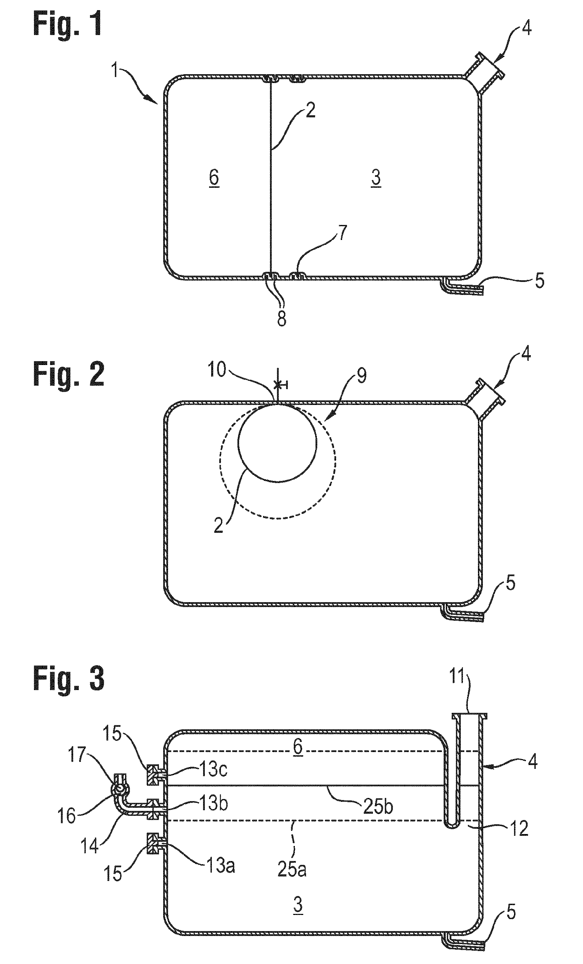

Fig. 1 zeigt einen schematischen Schnitt durch einen Betriebsmitteltank, insbesondere einen Kraftstofftank 1, eines erfindungsgemäßen landwirtschaftlichen Fahrzeugs. Eine ins Innere des Tanks 1 dicht eingefügte Trennwand 2 unterteilt den Tank 1 in ein Nutzvolumen 3, das über einen Einfüllstutzen 4 befüllbar ist und von dem eine Abflussleitung 5 zu einem Verbraucher ausgeht, und ein mit Luft gefülltes Totvolumen 6.

Da die Trennwand 2 im Innern des Tanks 1 vor Beschädigung geschützt ist und selbst im Falle eines Undichtwerdens der Trennwand 2 der Tank 1 das Freiwerden von Kraftstoff verhindert, kann die Trennwand 2 aus einem weniger strapazierfähigen Material als der Tank 1 selbst gefertigt sein.

An den Wänden des Tanks 1 können an verschiedenen Stellen Platzierungsmarken angebracht sein, die jeweils eine Position markieren, die die Trennwand 2 haben muss, um die Vorschriften eines gegebenen Landes zu erfüllen. Insbesondere können die Platzierungsmarken die Form einer Nut 7, im in Fig. 1 gezeigten Ausführungsbeispiel begrenzt von zwei in die Wand des Tanks geprägten Rippen 8, haben, in die die Trennwand 2 eingesteckt werden kann.

Einer in Fig. 2 gezeigten Weiterbildung zu Folge ist die Trennwand 2 dehnbar und bildet einen Teil eines Innenbehälters 9, der das Totvolumen 6 ballonartig umschließt. Der Innenbehälter 9 ist an einer Wand des Tanks 1 in Höhe einer Durchführung 10 befestigt, über die Luft dem Totvolumen 6 zugeführt oder aus diesem abgelassen werden kann, um das Totvolumen auf die mit den Vorschriften eines Landes, in dem die Maschine eingesetzt werden soll, kompatiblen Abmessungen zu bringen. Die Dehnbarkeit des Innenbehälters 9 erlaubt es, den Tank 1 einschließlich des Innenbehälters 9 länderübergreifend einheitlich zu fertigen; eine Anpassung des Totvolumens 6 kann noch nach dem Einbau des Tanks 1 im erfindungsgemäßen Fahrzeug vorgenommen werden.

Ein Problem des dehnbaren Innenbehälters 9 besteht jedoch darin, dass dessen tatsächliches Volumen nur schwierig zu verifizieren ist. Bei zu kleinem Volumen des Innenbehälters 9 kann es vorkommen, dass die gesetzlichen Gewichtsbeschränkungen nicht eingehalten werden; ist das Volumen des Innenbehälters 9 jedoch zu groß, dann muss häufiger als nötig getankt werden. Eine Weiterbildung, die diese Nachteile vermeidet, ist in Fig. 3 gezeigt. Bei dieser Ausgestaltung ist der Einfüllstutzen 4 als ein Rohr ausgebildet, dessen Einlassende 11 höher liegt als ein maximal erreichbarer Betriebsmittelspiegel im Tank 1 und von dem ein unteres Ende 12 in dem Tank 1 unterhalb eines in allen berücksichtigten Ländern zulässigen Betriebsmittelspiegels 25a liegt.

In einer Seitenwand des Tanks 1 sind vertikal gestaffelt mehrere identische Entlüftungsanschlüsse 13a-c angeordnet. An einem dieser Entlüftungsanschlüsse, hier dem Anschluss 13b ist ein Entlüftungsventil 14 angeordnet; die anderen sind jeweils mit einem Stopfen 15 dicht verschlossen.

Die Funktion des Entlüftungsventils 14 ist, das Entweichen von Luft aus dem Tank 1 zu ermöglichen, wenn beim Betanken der Betriebsmittelspiegel über das untere Ende des Einfüllstutzens 4 ansteigt und eine Entlüftung über den Einfüllstutzen 4 damit ausgeschlossen ist, andererseits aber den Austritt des Betriebsmittels zu verhindern. Im hier dargestellten Fall umfasst das Entlüftungsventil 14 zu diesem Zweck eine Kammer 16 mit einem Schwimmer 17, der in Kontakt mit dem Betriebsmittel aufschwimmt und gegen einen Ventilsitz an einem oberen Ende der Kammer 16 gedrückt wird. Der Betriebsmittelspiegel, bei dem dies geschieht, ist der höchste Betriebsmittelspiegel, bis zu dem der Tank 1 befüllbar ist und markiert die Grenze zwischen dem befüllbaren Nutzvolumen 3 und dem darüber liegenden Totvolumen 6. Wenn das Entlüftungsventil 14 wie in der Figur gezeigt am mittleren Entlüftungsanschluss 13b montiert ist, ergibt sich der in der Figur als durchgezogene Linie eingezeichnete Spiegel 25b; die Spiegel 25a, 25c, die sich bei Anbringung des Entlüftungsventils 14 am unteren bzw. oberen Entlüftungsanschluss 13a bzw. 13c ergeben, sind als gestrichelte Linien eingezeichnet.

Es liegt auf der Hand, dass mit dem in Fig. 3 gezeigten Tank so viele unterschiedliche Nutzvolumina 3 realisierbar sind, wie Entlüftungsanschlüsse 13a-c vorhanden sind, und dass die Platzierung eines jeden Entlüftungsanschlusses 13a-c exakt vorgibt, wie groß das entsprechende Nutzvolumen 3 ist. Der Hersteller des Tanks 1 kann daher über die Platzierung der Entlüftungsanschlüsse 13 exakt die maximalen Gewichte vorgeben, die der Tank 1 bei vollständig gefülltem Nutzvolumen 3 annehmen kann, und auf diese Weise sicherstellen, dass das zulässige Gesamtgewicht oder die zulässige Achslast des Fahrzeugs voll ausgeschöpft, aber nicht überschritten wird.

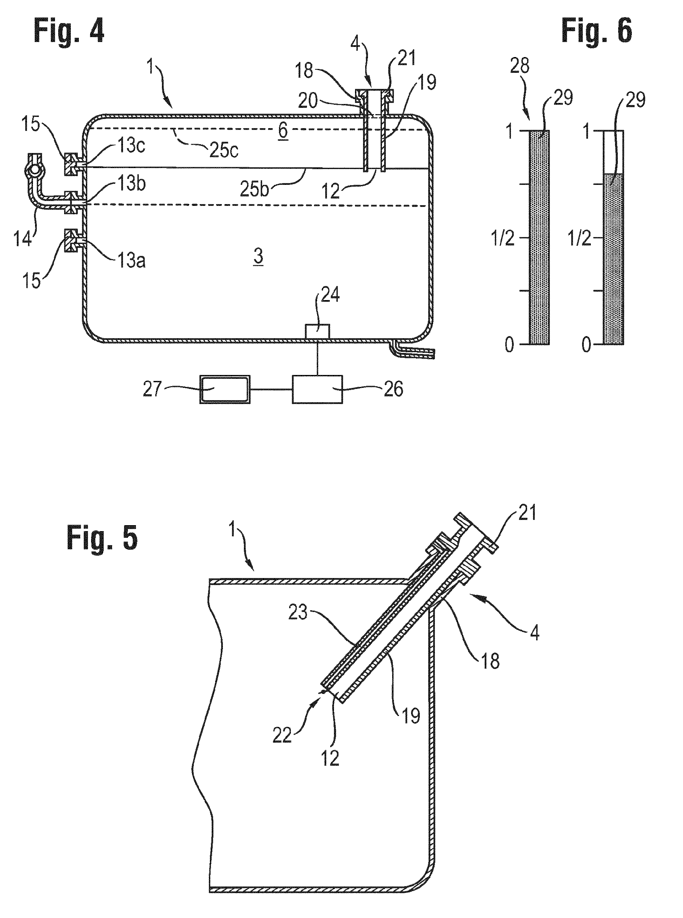

Um die Emission von Kohlenwasserstoffdämpfen beim Betanken eines Fahrzeugs mit Kraftstoff zu reduzieren, sind moderne Tankanlagen mit einer Gasrückführung ausgestattet, die dazu dient, das Luft-Kraftstoffdampf-Gemisch aufzufangen, das beim Betanken aus dem Tank 1 verdrängt wird und über den Einfüllstutzen 4 austritt. Bei dem Tank der Fig. 3 kann das Luft-Kraftstoffdampf-Gemisch, sobald der Kraftstoffspiegel über dem unteren Ende 12 des Einfüllstutzens 4 liegt, nur noch über das Entlüftungsventil 14 entweichen und wird daher von einer Gasrückführung an der Zapfpistole nicht mehr erfasst. Um diesen Nachteil zu vermeiden, ist bei der Ausgestaltung der Fig. 4 der Einfüllstutzen 4 mehrteilig aufgebaut. Der Einfüllstutzen 4 umfasst hier ein fest mit dem Tank 1 verbundenes äußeres Rohr 18 sowie ein in dem äußeren Rohr 18 formschlüssig aufgenommenes inneres Rohr 19, das sich durch eine Wandöffnung 20 des Tanks hindurch nach unten ins Innere des Tanks 1 hinein erstreckt und das untere Ende 12 des Einfüllstutzens 4 bildet. Indem das untere Ende 12 des inneren Rohrs 19 sich in Höhe des vom - hier am Anschluss 13b montierten - Entlüftungsventil 14 festgelegten maximalen Betriebsmittelspiegels 25b oder knapp darunter befindet, ist ein Entlüften über den Einfüllstutzen 4 während des gesamten Tankvorgangs. Bis zum Erreichen des Spiegels 25b, möglich, und das Entlüftungsventil 14 wird nur noch benötigt, um einen Druckausgleich mit der Umgebung zu ermöglichen, wenn der Tank 1 und sein Inhalt sich erwärmen oder abkühlen, während der Einfüllstutzen 4 von einem Tankdeckel dicht verschlossen ist.

Die einzige Komponente, die länderspezifisch variiert werden muss, ist hier das innere Rohr 19, dessen Länge jeweils zu dem Entlüftungsanschluss 13a, b oder c passen muss, an dem das Entlüftungsventil 14 angebracht ist.

Die verschiedenen Modelle von innerem Rohr 19 können an einem bei geöffnetem Tankdeckel freiliegenden einlassseitigen Flansch 21 eine Codierung aufweisen, die es ermöglicht, sie zu unterscheiden, ohne sie aus dem äußeren Rohr 18 herausnehmen zu müssen. So kann jederzeit verifiziert werden, ob inneres Rohr 19 und Einbauposition des Entlüftungsventils 14 zusammenpassen.

Einer in Fig. 5 gezeigten Abwandlung zu Folge sind die Entlüftungsanschlüsse 13 am Tank 1 entfallen, stattdessen ist das Entlüftungsventil 14 in das innere Rohr 19 integriert, hier zum Beispiel in Form eines Schwimmers 22, der vor eine Entlüftungsbohrung 23 des inneren Rohrs 19 schwenkt und diese verschließt, sobald der Betriebsmittelspiegel im Tank 1 über das untere Ende 12 des inneren Rohrs 19 hinaus ansteigt. So entfällt die Notwendigkeit, jeweils ein Entlüftungsventil passend zur Länge des Rohrs 19 zu montieren; um den Tank an unterschiedliche Gewichtsvorgaben anzupassen, genügt es, das innere Rohr 19 auszutauschen.

Der Betriebsmitteltank 1 ist, wie exemplarisch in Fig. 4 gezeigt, mit einem Füllstandssensor 24 ausgestattet, der über eine Verarbeitungseinheit, etwa einen Bordcomputer 26, mit einem Füllstandsanzeiger 27 in der Fahrerkabine des Fahrzeugs verbunden ist. Der Bordcomputer 26 rechnet anhand einer die Geometrie des Tanks 1 berücksichtigenden Kennkurve die Druckmesswerte des Sensors 24 in Bruchteile des Fassungsvermögens des Tanks 1 um und stellt diese auf dem Füllstandsanzeiger 27 in Form eines entlang einer Skala 28 beweglichen Zeigers oder eines Balkens 29 von variabler Länge dar. Im in Fig. 4 gezeigten Fall, dass der Betriebsmittelspiegel das höchste bei der Einbaulage des Entlüftungsventils 14 am Anschluss 13b erreichbare Niveau 25b hat, der Tank 1 also voll ist, reicht der Balken 29 über die gesamte Länge der Skala 28. Wenn jedoch bei gleichem Betriebsmittelspiegel 25b das Entlüftungsventil 14 am höchst gelegenen Anschluss 13c montiert und ein kürzeres inneres Rohr 19 eingebaut wäre, so dass der höchste erreichbare Betriebsmittelspiegel der Spiegel 25c wäre, dann entspricht der Spiegel 25b nur einem teilvollen Tank. Dem kann auf einfache Weise durch Austausch der Kennkurve im Bordcomputer 26 Rechnung getragen werden, so dass derselbe Betriebsmittelspiegel 25 nur einen verkürzten Balken 29 am Füllstandsanzeiger ergibt, wie im rechten Teil von Fig. 6 dargestellt.

Alternativ könnte der Bordcomputer anhand einer geeigneten Kennkurve die Messwerte des Sensors 24 in absolute Werte der im Tank 1 enthaltenen Betriebsmittelmenge, angegeben z.B. in Litern oder Kilogramm, umrechnen, die Differenz zwischen dieser Menge und einem Referenzwert bilden und diese Differenz, z.B. in numerischer Form, anzeigen. Wenn als Referenzwert jeweils die länderspezifisch höchste zulässige Menge eingestellt bzw. in einem Arbeitsspeicher des Bordcomputers 26 eingetragen ist, dann entspricht der Anzeigewert der Menge an Betriebsmittel, die noch zugeladen werden kann, bis die zulässigen Gewichtsgrenzen ausgeschöpft bzw. das Nutzvolumen 3 des Tanks 1 voll ist.

### Bezugszeichen

- 1: Betriebsmitteltank
- 2: Trennwand
- 3: Nutzvolumen
- 4: Einfüllstutzen
- 5: Abflussleitung
- 6: Totvolumen
- 7: Nut
- 8: Rippe
- 9: Innenbehälter
- 10: Durchführung
- 11: Einlassende
- 12: unteres Ende
- 13a, b, c: Anschluss
- 14: Entlüftungsventil
- 15: Stopfen
- 16: Kammer
- 17: Schwimmer
- 18: äußeres Rohr
- 19: inneres Rohr
- 20: Wandöffnung
- 21: Flansch
- 22: Schwimmer
- 23: Entlüftungsbohrung
- 24: Füllstandssensor
- 25a, b, c: Betriebsmittelspiegel
- 26: Bordcomputer
- 27: Füllstandsanzeiger
- 28: Skala
- 29: Balken

## Patentansprüche

1. Landwirtschaftliches Fahrzeug mit einem Betriebsmitteltank (1), **dadurch gekennzeichnet, dass** der Betriebsmitteltank (1) ein mit Betriebsmittel befüllbares Nutzvolumen (3) und ein nicht befüllbares Totvolumen (6) aufweist.

2. Landwirtschaftliches Fahrzeug nach Anspruch 1, **dadurch gekennzeichnet, dass** die Aufteikung des Tanks (1) in Nutzvolumen (3) und Totvolumen (6) veränderbar ist.

3. Landwirtschaftliches Fahrzeug nach Anspruch 1 oder 2, **dadurch gekennzeichnet, dass** Nutzvolumen (3) und Totvolumen (6) durch eine Wand (2) voneinander getrennt sind.

4. Landwirtschaftliches Fahrzeug nach Anspruch 3, **dadurch gekennzeichnet, dass** der Betriebsmitteltank (1) wenigstens einen inneren Behälter (9) enthält, von dem die Wand (2) ein Teil ist.

5. Landwirtschaftliches Fahrzeug nach Anspruch 3 oder 4, **dadurch gekennzeichnet, dass** die Wand (2) beweglich, insbesondere flexibel und/oder dehnbar, ist.

6. Landwirtschaftliches Fahrzeug nach Anspruch 1 oder 2, **dadurch gekennzeichnet, dass** wenigstens ein Teil (6) des Tanks (1) oberhalb eines unteren Endes (12) eines Einfüllstutzens (4) liegt.

7. Landwirtschaftliches Fahrzeug nach Anspruch 1, 2 oder 6, **dadurch gekennzeichnet, dass** der Tank (1) mehrere Entlüftungsanschlüsse (13a, 13b, 13c) in unterschiedlichen Höhen aufweist, die bis auf einen dicht verschlossen sind.

8. Landwirtschaftliches Fahrzeug nach Anspruch 7, **dadurch gekennzeichnet, dass** ein gleicher Stopfen (15) auf alle Entlüftungsanschlüsse (13a, 13b, 13c) passt.

9. Landwirtschaftliches Fahrzeug nach Anspruch 6, 7 oder 8, **dadurch gekennzeichnet, dass** der Einfüllstutzen (4) ein ins Tankinnere hineinragendes Rohr (19) umfasst.

10. Landwirtschaftliches Fahrzeug nach Anspruch 9, **dadurch gekennzeichnet, dass** das Rohr (19) ein von einer Wand des Tanks (1) getrenntes und in eine Öffnung (20) der Wand dicht eingefügtes Bauteil ist.

11. Landwirtschaftliches Fahrzeug nach einem der vorhergehenden Ansprüche, **dadurch gekennzeichnet, dass** der Tank (1) ein Kraftstofftank oder ein Tank für ein Verbrennungshilfsmittel, insbesondere für Harnstofflösung, ist.

12. Landwirtschaftliches Fahrzeug nach einem der vorhergehenden Ansprüche, mit einem Füllstandsanzeiger (27), an dem die Differenz zwischen einem aktuellen Füllstand und einem Referenzfüllstand ablesbar ist, wobei der Referenzfüllstand veränderbar ist.

13. Landwirtschaftliches Fahrzeug nach Anspruch 11, **dadurch gekennzeichnet, dass** der Füllstandsanzeiger (27) eine Skala (28) aufweist, wobei der Referenzfüllstand einen Endpunkt der Skala bildet.

14. Landwirtschaftliches Fahrzeug nach Anspruch 11, **dadurch gekennzeichnet, dass** der Füllstandsanzeiger einen zu der Differenz direkt proportionalen Zahlenwert anzeigt.
